# EUROPÄISCHE PATENTSCHRIFT

(11) **EP 2 391 845 B1**
(45) Veröffentlichungstag und Bekanntmachung des Hinweises auf die Patenterteilung: **04.03.2015**
(21) Anmeldenummer: 10742779.1
(22) Anmeldetag: 13.07.2010
(51) Int. Cl.: H02G 3/04, H02G 3/06, F16L 33/26, F16L 33/30, F16L 25/00

(54) **ENDSTÜCK FÜR EINEN WELLSCHLAUCH UND TEILESATZ MIT EINEM SOLCHEN ENDSTÜCK**
END PIECE FOR A CORRUGATED HOSE AND PARTS SET COMPRISING SUCH AN END PIECE
PIÈCE D'EXTRÉMITÉ POUR UN TUYAU ANNELÉ, ET ENSEMBLE DE PIÈCES SE PRÉSENTANT AVEC UNE TELLE PIÈCE D'EXTRÉMITÉ

(30) Priorität: 20.07.2009 DE 102009027843
(43) Veröffentlichungstag der Anmeldung: 07.12.2011
(73) Patentinhaber: AREVA GmbH, 91052 Erlangen (DE)
(72) Erfinder: STARK, Stefan, Effeltrich 91090 (DE)
(74) Vertreter: Meissner, Bolte & Partner GbR
(86) Internationale Anmeldenummer: PCT/EP2010/060005
(87) Internationale Veröffentlichungsnummer: WO 2011/009753

(56) Entgegenhaltungen:
- WO-A1-02/061322
- US-A- 4 247 136
- US-A- 4 575 133
- US-A- 5 160 811
- US-A1- 2004 178 633

## Beschreibung

Die Erfindung betrifft ein Endstück zum Aufsetzen auf ein Freiende eines Wellschlauches sowie einen Teilesatz mit einem solchen Endstück.

Wellschläuche bzw. Wellrohre, im Folgenden allgemein als Wellschläuche bezeichnet, werden vielerorts als Schutzrohr für einen eigentlichen Nutzungsträger wie beispielsweise Kabel oder Rohre verwendet. Je nach Einsatzgebiet werden Wellschläuche aus Metall oder Kunststoff eingesetzt. Während für Kabelkanäle in der Gebäudetechnik vornehmlich Wellschläuche aus Kunststoff verwendet werden, werden in der Kernkraftwerkstechnik aufgrund der dort auftretenden Strahlenbelastung vornehmlich Wellschläuche aus Metall eingesetzt. Bei ihrer Montage werden die Wellschläuche auf die jeweils passende Länge zurechtgeschnitten. Beim Abschneiden des Wellschlauches entstehenden an dessen Freienden scharfe Schnittkanten. Diese stellen eine Verletzungsgefahr für den Montagearbeiter dar, und können außerdem dazu führen, dass von dem Wellschlauch aufgenommene Kabel an diesen scharfen Schnittkanten durchgescheuert werden. Neben der Gebäude- und Kernkraftwerkstechnik betrifft dieses Problem auch Roboter und andere Maschinen, bei denen Kabel in einem Wellschlauch einem beweglichen Bauteil zugeführt werden.

Beide Dokumente des Stands der Technik US 5160811 A und US 2004/0178633 A1 offenbaren Endstücke für einen Wellschlauch.

Auf dem Gebiet der Kernkraftwerkstechnik ist außerdem eine Montage unter minimalem Werkzeugeinsatz erstrebenswert, jedes Werkzeug, welches in den Sicherheitsbereich eines Kernkraftwerkes verbracht werden muss, zieht einen erheblichen Aufwand an Sicherungsmaßnahmen nach sich.

Aufgabe der vorliegenden Erfindung ist es, ein Endstück für einen Wellschlauch sowie einen Teilesatz mit einem solchen Endstück anzugeben, mit dessen Hilfe die von den scharfkantigen Freienden des Wellschlauches ausgehenden Gefahren verringert werden können und welches einfach montierbar ist.

Die Aufgabe wird gemäß der Erfindung gelöst durch ein Endstück mit den Merkmalen nach Anspruch 1 sowie durch einen Teilesatz mit den Merkmalen nach Anspruch 14 oder 15. Vorteilhafte Ausgestaltungen sind Gegenstand der abhängigen Ansprüche.

Das erfindungsgemäße Endstück zum Aufsetzen auf ein Freiende eines Wellschlauchs umfasst eine Buchse, mit einem dem Freiende des Wellschlauchs zugewandten vorderen Bereich und einem diesem vorderen Bereich in einer Längsrichtung der Buchse gegenüberliegenden hinteren Bereich, welcher sich im montierten Zustand der Buchse innerhalb des Wellschlauchs befindet. Der vordere Bereich der Buchse besteht aus einem Kragen, welcher das Freiende des Wellschlauchs zumindest teilweise umschließt, radial in Richtung eines von der Buchse nicht umschlossenen Außenraums vorspringt und eine entlang des Umfangs der Buchse verlaufende, sich in Längsrichtung der Buchse öffnende Nut zur zumindest teilweisen Aufnahme des Freiendes des Wellschlauchs bildet. Der in Längsrichtung dem vorderen Bereich gegenüberliegende hintere Bereich der Buchse besteht aus einer Mehrzahl von Federzungen. Diese weisen eine senkrecht zu der Längsrichtung der Buchse orientierte, in Richtung des Außenraums der Buchse gerichtete Entlastungsrichtung auf. Zumindest ein Teil der Federzungen ist mit zumindest einem auf einer dem Außenraum zugewandten Außenseite der jeweiligen Federzunge angeordneten und radial vorspringenden Rastvorsprung zur Realisierung eines in Längsrichtung der Buchse wirksamen Hintergriffs versehen. Das erfindungsgemäße Endstück umfasst außerdem eine von der Buchse aufnehmbare Sicherungshülse, welche sich im montierten Zustand des Endstückes - betrachtet in Längsrichtung - in zumindest einem Teil des hinteren Bereiches der Buchse in einem von der Buchse umschlossenen Innenraum erstreckt. Diese Sicherungshülse begrenzt das Radialspiel der Federzungen in Richtung des Innenraums der Buchse.

Die Konstruktion des erfindungsgemäßen Endstückes basiert auf den folgenden Überlegungen:
Zum Schutz der von dem Wellschlauch aufgenommenen Kabel und des den Wellschlauch montierenden Arbeiters wird das scharfkantige Freiende des Wellschlauches von einer Nut einer Buchse abgedeckt. Es wurde erkannt, dass das Wellenprofil eines Wellschlauches eine einfache Möglichkeit bietet, die Buchse in Längsrichtung an dem Wellschlauch zu befestigen. Um eine einfache werkzeuglose Montage zu ermöglichen, wurden Rastvorsprünge, welche in das Wellenprofil des Wellschlauches eingreifen an Federelementen angebracht. Während die Buchse in den Wellschlauch eingeschoben wird, schnappen die federnd gelagerten Rastvorsprünge solange über die einzelnen Wellen des Wellenprofils hinweg, bis die Buchse ihre Endposition erreicht hat. Um einen sicheren Halt des Endstücks an dem Wellschlauch zu gewährleisten, wird eine Sicherungshülse in die Buchse eingebracht, welche verhindert, dass sich der zwischen den Rastvorsprüngen und den Wellen des Wellschlauchs vorhandene Hintergriff durch Zurückschnappen der Federzungen erneut löst.

Der Vorteil des erfindungsgemäßen Endstückes besteht darin, dass sich dieses einfach und gänzlich ohne zusätzliches Werkzeug montieren lässt. Außerdem ist das erfindungsgemäße Endstück gegen ein versehentliches Abziehen von dem Wellschlauch gesichert, was das Verlegen des Wellschlauches erheblich vereinfacht.

Gemäß einer ersten Ausführungsform wird die Sicherungshülse passgenau von der Buchse aufgenommen. Dabei begrenzt die Sicherungshülse das Radialspiel der Federzungen auf eine Wegstrecke, die kleiner als die radiale Ausdehnung der Rastvorsprünge in Richtung des Außenraums der Buchse ist. In diesem Zusammenhang wird die radiale Ausdehnung der Rastvorsprünge zwischen einer dem Außenraum zugewanden Außenseite der Buchse und einem Freiende der Rastvorsprünge gemessen. Indem das Radialspiel auf den angegebenen Wert begrenzt wird, ist sichergestellt, dass der Rastvorsprung stets aus der Außenoberfläche der Buchse hervorsteht. Da die Außenoberfläche der Buchse bevorzugt an der Innenfläche des Wellschlauches unmittelbar anliegt, kann sichergestellt werden, dass die Rastvorsprünge stets in die Wellung des Wellschlauchs eingreifen. Das Endstück ist also sicher an dem Wellschlauch gehalten.

Gemäß einer weiteren Ausführungsform erstreckt sich die Sicherungshülse ausgehend von dem hinteren Bereich der Buchse entlang einer dem Innenraum der Buchse zugewandten Innenseite der Buchse bis in den vorderen Bereich der Buchse. Mit anderen Worten wird die Buchse von der Sicherungshülse praktisch vollständig durchgriffen. Diese Maßnahme trägt zur mechanischen Stabilisierung der Buchse bei, insbesondere wird der hintere Bereich der Buchse, welcher aus einer Vielzahl von Federzungen besteht, vollständig von der im Innenraum der Buchse vorhandenen Sicherungshülse stabilisiert, so dass eine zuverlässige Sicherung der Federzungen gewährleistet ist.

Um die Zuverlässigkeit des Endstückes weiter zu verbessern, wird, gemäß einer weiteren Ausführungsform, die Sicherungshülse verschiebesicher in der Buchse gehalten. Dabei ist es erstrebenswert, die Sicherungshülse sowohl gegen ein Verschieben in Richtung des hinteren Bereiches als auch gegen ein Verschieben in Richtung des vorderen Bereiches der Buchse zu sichern.

Ein Verschieben der Sicherungshülse in Richtung des hinteren Bereiches der Buchse wird durch einen an der Buchse vorhandenen Anschlag verhindert. Dieser Anschlag stellt sicher, dass bei der Montage der Sicherungshülse diese nicht versehentlich zu weit in die Buchse hineingedrückt wird. In einem solchen Fall wäre die Sicherung des Endstückes ggf. nicht mehr gewährleistet, das Endstück müsste wieder entfernt und der Wellschlauch eventuell erneut zugeschnitten werden. Ein solcher Anschlag verbessert also die Handhabung des Endstückes.

Gemäß einer weiteren Ausführungsform wird der Anschlag zwischen einem sich am hinteren Ende der Buchse in radialer Richtung in Richtung des Innenraumes der Buchse erstreckenden Vorsprung und einem dem hinteren Ende der Buchse zugewandten Freiende der Sicherungshülse hergestellt. Vorteilhaft werden mit einem solchen Anschlag neben der Sicherungshülse gleichzeitig die Federzungen gesichert.

Das vorgeschlagene Endstück dient dazu, eine Beschädigung der in dem Wellschlauch geführten Kabel zu verhindern. Somit sollte das Endstück selbst keine neuen Gefahrenquellen für die geführten Kabel mit sich bringen. Aus diesem Grund schließen, gemäß einer Weiterbildung, der sich in Richtung des Innenraums der Buchse erstreckende Vorsprung und die Innenseite der Sicherungshülse formschlüssig ab. Eine dem Innenraum zugewandte scharfe Kante kann somit wirksam vermieden werden, wodurch die Gefahr für Beschädigungen der im Inneren des Wellschlauches geführten Kabel wesentlich verringert werden kann.

Alternativ oder zusätzlich zu den zuvor genannten Maßnahmen wird die Sicherungshülse gegen ein Verschieben in Richtung des hinteren Bereiches der Buchse mit Hilfe eines Anschlages gesichert, welcher zwischen einer an einer vorderen Stirnseite des Kragens vorhandenen, radial umlaufenden Freidrehung und einem an dem vorderen Freiende der Sicherungshülse vorhandenen, radial in Richtung des Außenraums vorspringenden Flansch hergestellt ist. Vorteilhaft kann der Monteur leicht feststellen, ob der in Rede stehende Anschlag vorliegt oder nicht. Somit kann der akkurate Sitz der Sicherungshülse durch einfache Sichtkontrolle festgestellt werden. Gemäß einer Weiterbildung schließen die Stirnseite des Flansches und die Stirnseite des Kragens bündig ab. Die Verletzungsgefahr für die aus dem Endstück ausmündenden Kabel sowie für einen Monteur, welcher nach Aufsetzen des Endstückes auf den Wellschlauch mit diesem hantiert, kann deutlich verringert werden.

Um einen sicheren Halt des Endstückes auf dem Freiende des Wellschlauches zu gewährleisten, soll, gemäß einer weiteren Ausführungsform, nicht nur ein Hineinrutschen der Sicherungshülse in die Buchse, sondern auch deren Herausrutschen aus der Sicherungshülse verhindert werden. Aus diesem Grund ist die Sicherungshülse gegen eine Verschiebung in Richtung des vorderen Bereiches der Buchse durch einen Hintergriff zumindest eines an der Sicherungshülse vorhandenen Federelementes, welches in eine an der Buchse vorhandene Nut eingreift, gesichert. Eine solche Konstruktion erlaubt es, die Sicherungshülse nach der Art einer "Klick-Verbindung" mit der Buchse zu verbinden. Gemäß einer Weiterbildung weist das an der Sicherungsbuchse vorhandene Federelement eine in Richtung des Außenraums gerichtete Entlastungsrichtung auf. Die in der Buchse vorhandene Nut ist in diesem Fall in Richtung des Innenraums geöffnet. Bevorzugt ragt das Federelement nicht in den Innenraum der Sicherungshülse hinein, so dass auch dieses für die im Innenraum geführten Kabel kein Beschädigungsrisiko darstellt. Um eine schnelle Montage des Endstückes auf dem Freiende des Wellschlauches zu ermöglichen ist, gemäß einer weiteren Ausführungsform, die Nut radial umlaufend in die Buchse eingelassen. Somit ist die Verbindung zwischen der Buchse und der Sicherungshülse drehinvariant; dies erleichtert die Montage der Sicherungshülse erheblich.

Gemäß einer weiteren Ausführungsform weisen die Rastvorsprünge eine Abschrägung auf, welche beginnend an ihren Freienden in Richtung des hinteren Bereiches der Buchse verläuft. Beim Einschieben der Buchse in das Ende des Wellschlauches springen die Rastvorsprünge von einer Welle des Wellschlauches zur nächsten, solange, bis die Endposition des Endstückes erreicht ist. Mit Hilfe der vorgesehenen Abschrägungen wird das Überspringen der Wellen beim Hineinschieben des Endstückes in den Wellschlauch erleichtert; ein Herausziehen desselben jedoch erschwert. Somit ist bereits ohne, dass die Sicherungshülse in die Buchse eingeschoben wird, erstere gegenüber versehentlichem Herausziehen gesichert.

Der erfindungsgemäße Teilesatz besteht aus einem Wellschlauch und einem oben erläuterten Endstück. Die Ausdehnung der radial vorspringenden Rastvorsprünge dieses Endstückes ist in Längsrichtung desselben kleiner als der zwischen benachbarten Wellen des Wellschlauches - gemessen auf der Innenseite des Wellschlauches - vorhandene Freiraum. Mit anderen Worten ist die Ausdehnung der Rastvorsprünge in Längsrichtung des Endstückes an die Innenabstände der Wellen des Wellschlauches angepasst. Wellschlauch und Endstück sind also aufeinander abgestimmt.

Dies gilt für einen alternativen Teilesatz, bei dem die Rastvorsprünge passgenau zu dem vorgenannten Freiraum bemessen sind.

Gemäß einer Ausführungsform weist der Kragen des Endstückes einen radial umlaufenden, sich in Richtung des hinteren Bereiches der Buchse erstreckenden Außenmantel auf, welcher die Nut in Richtung des Außenraums begrenzt. Dieser Außenmantel ist nun derart dimensioniert, dass der Abstand zwischen einem Boden der Nut und einem Freiende des Außenmantels größer ist als der Abstand benachbarter Wellen des Wellschlauches. Eine solche Konstruktion hat den Effekt, dass das Freiende des Wellschlauches stets von der Nut des Kragens aufgenommen ist.

Im Folgenden wird die Erfindung unter Bezugnahme auf die Figuren der Zeichnungen näher erläutert. Sich entsprechende Teile sind dabei mit den gleichen Bezugszeichen versehen.
- Fig. 1: zeigt einen Längsschnitt durch einen Wellschlauch sowie ein jeweils halbseitig in einem Längsschnitt bzw. in Draufsicht dargestelltes Endstück,
- Fig. 2: zeigt eine halbseitig in einem Längsschnitt bzw. in Draufsicht dargestellte Buchse,
- Fig. 3: zeigt einen Ausschnitt der Fig. 2,
- Fig. 4: zeigt die aus Fig. 2 bekannte Buchse in einer Aufsicht aus der in Fig. 2 mit IV bezeichneten Richtung und
- Fig. 5: zeigt eine Sicherungshülse in Draufsicht.

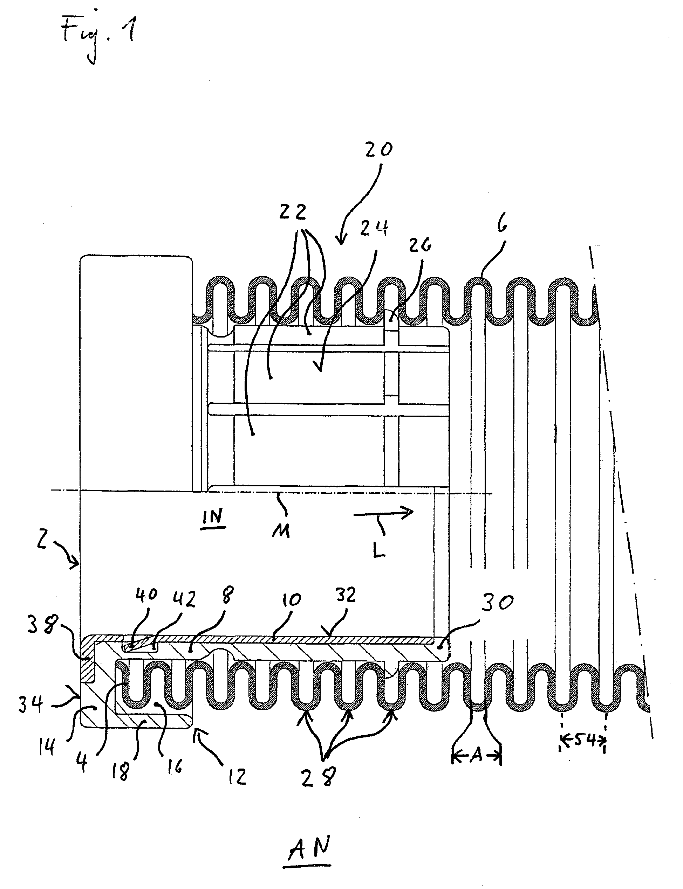

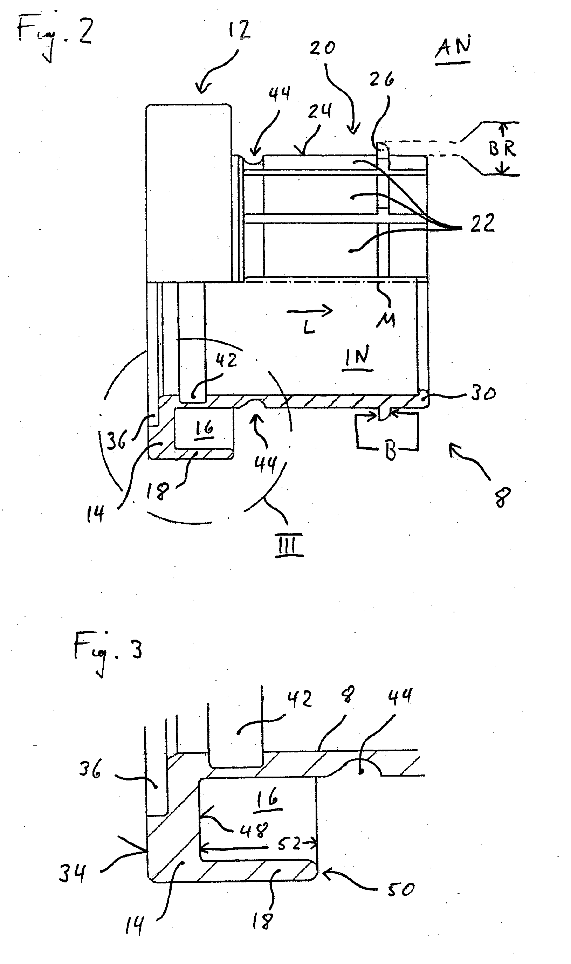

Fig. 1 zeigt ein Endstück 2, welches auf ein Freiende 4 eines Wellschlauches 6 aufgesetzt ist. Das Endstück 2 ist bis zu seiner Mittenachse M, welche sich in einer Längsrichtung L des Endstückes 2 erstreckt, auf der in Fig. 1 unten gezeigten Hälfte geschnitten und in der oberen Hälfte in Draufsicht dargestellt. Das Endstück 2 besteht aus einer Buchse 8, welche eine Sicherungshülse 10 passgenau aufnimmt. In einem vorderen Bereich 12 der Buchse 8 besteht diese aus einem Kragen 14, welcher eine Nut 16 zur Aufnahme des Freiendes 4 des Wellschlauches 6 ausbildet. In Richtung eines Außenraumes AN ist die Nut 16 durch einen Außenmantel 18 begrenzt. In einem dem vorderen Bereich 12 in Längsrichtung L der Buchse 8 entgegengesetzten hinteren Bereich 20, der sich im montierten Zustand des Endstückes 2 innerhalb des Wellschlauches 6 befindet, besteht die Buchse 8 aus einer Vielzahl von Federzungen 22. Diese Federzungen 22 weisen eine in Richtung des Außenraumes AN der Buchse 8 gerichtete Entlastungsrichtung auf. Auf ihrer dem Außenraum AN zugewandten Außenseite 24 befinden sich radial vorspringende Rastvorsprünge 26. Mit Hilfe dieser Rastvorsprünge 26 wird ein in Längsrichtung L wirksamer Hintergriff zwischen einer der Wellen 28 des Wellschlauches 6 und der Buchse 8 hergestellt. Die Buchse 8 umschließt einen Innenraum IN, in diesem erstreckt sich im Wesentlichen über die gesamte Länge der Buchse 8 die Sicherungshülse 10. Diese dient dazu, das Radialspiel der Federzungen 22 derart zu begrenzen, dass das Endstück 2 sicher in dem Wellschlauch 6 gehalten ist. Zu diesem Zweck ist die Sicherungshülse 10 passgenau in die Buchse 8 eingepasst. Sie begrenzt das Radialspiel der Federzungen 22 in Richtung des Innenraumes IN auf eine Wegstrecke, die kleiner ist als die radiale Ausdehnung BR (vgl. Fig. 2) der Rastvorsprünge 26 in Richtung des Außenraumes AN der Buchse 8. Die radiale Ausdehnung BR der Rastvorsprünge 26 wird ausgehend von einer dem Außenraum AN zugewandten Außenseite 24 der Federzungen 22 und einem Freiende der entsprechenden Federzunge 26 gemessen.

Die Sicherungshülse 10 ist verschiebesicher in der Buchse 8 gehalten. Grundsätzlich wäre es möglich die Verschiebesicherheit durch einen reibschlüssigen Sitz der Sicherungshülse 10 in der Buchse 8 zu gewährleisten. Im vorliegenden Ausführungsbeispiel wird die Sicherungshülse 10 jedoch durch einen zwischen der Buchse 8 und der Sicherungshülse 10 vorhandenen Anschlag gegen Verschiebung in Richtung des hinteren Bereiches 20 der Buchse 8 gesichert. Dieser Anschlag befindet sich zwischen einem sich radial in Richtung des Innenraumes IN der Buchse 8 erstreckenden Vorsprung 30 und einem im hinteren Bereich 20 der Buchse 8 anliegenden Freiende der Sicherungshülse 10. Um für die im Innenraum IN des Endstücks 2 sowie die innerhalb des Wellschlauches 6 geführten Kabel jegliche Verletzungsgefahr auszuschließen, schließt die Innenseite 32 der Sicherungshülse 10 mit dem Vorsprung 30 formschlüssig ab.

Ein weiterer Anschlag besteht zwischen einer in die vordere Stirnseite 34 des Kragens 14 eingelassenen Freidrehung 36 und einem radial umlaufenden, in Richtung des Außenraumes AN vorspringenden Flansch 38 der Sicherungshülse 10. Um auch in diesem Bereich des Endstücks scharfe Kanten nach Möglichkeit vollständig zu vermeiden, schließen die Stirnseite 34 des Kragens 14 und die Stirnseite des Flansches 38 bündig ab.

Um neben einem Hineinrutschen der Sicherungshülse 10 in den Wellschlauch 6 auch eine Herausrutschen der Sicherungshülse 10 aus der Buchse 8 zu verhindern, ist die Sicherungshülse 10 mit Hilfe eines Federelementes 40 gesichert. Dieses Federelement 40 greift in eine in die Innenseite der Buchse 8 eingelassene Sicherungsnut 42, welche in Richtung des Innenraumes IN geöffnet ist. Das Federelement 40, welches einteilig an die Sicherungshülse 10 angeformt ist, weist eine in Richtung des Außenraumes AN gerichtete Entlastungsrichtung auf. Die Sicherungsnut 42 erstreckt sich radial umlaufend in der Buchse 8, und sichert so einen drehinvarianten Sitz der Sicherungshülse 10 in der Buchse 8.

Fig. 2 zeigt die bereits aus Fig. 1 bekannten Buchse 8 allein, wobei im unteren Teil der Darstellung diese in einem Längsschnitt und im oberen Teil in Draufsicht dargestellt ist. Die Federzungen 22 sind einstückig an die Buchse 8 angeformt, um deren Flexibilität in Radialrichtung zu gewährleisten, befindet sich im Bereich des Überganges zwischen dem eigentlichen Körper der jeweiligen Federzunge 22 und der Buchse 8 eine Verjüngung 44. Ebenfalls gut sichtbar ist die radial auf der Innenseite der Buchse 8 umlaufende Sicherungsnut 42, in welche das Federelement 40 der Sicherungshülse 10 eingreift.

Fig. 3 zeigt eine vergrößerte Ansicht des in Fig. 2 entsprechend markierten Ausschnitts. Deutlich sichtbar ist die zur Aufnahme des Freiendes 4 des Wellschlauches 6 vorgesehene Nut 16, sowie die die Elastizität der Federzungen 22 gewährleistende Verjüngung 44. Der radial umlaufende Außenmantel 18 des Kragens 14 begrenzt die Nut 16 in Radialrichtung. Die Höhe 52 des Außenmantels 18 in Längsrichtung L, welche zwischen einem Boden 48 der Nut 16 und einem Freiende 50 des Außenmantels 18 gemessen wird, ist größer als der Abstand 54 (vgl. Fig. 1) benachbarter Wellen 28 des Wellschlauchs 6 gewählt. Diese Dimensionierung des Außenmantels 18 sorgt dafür, dass das Freiende 4 des Wellschlauches 6 stets von der Nut 16 der Buchse 8 aufgenommen wird.

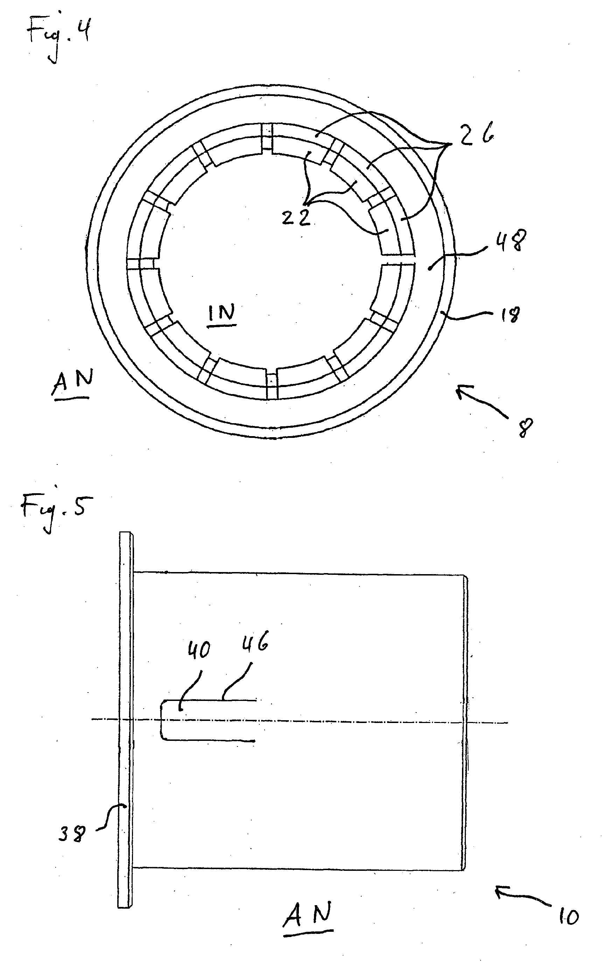

Fig. 4 zeigt eine Draufsicht der Buchse 8 aus der in Fig. 2 mit IV bezeichneten Richtung. Deutlich sichtbar ist die in die nunmehr senkrecht auf der Papierebene weisende Längsrichtung L geöffnete Nut 16. Der Blick des Betrachters fällt unmittelbar auf den Boden 48 dieser Nut 16. Die an den Federzungen 22 vorhandenen Rastvorsprünge 26 erstrecken sich auf deren Außenseite 24 in Umfangsrichtung im Wesentlichen über die komplette Breite der Federzungen 22.

Fig. 5 zeigt die bereits aus Fig. 1 bekannte Sicherungshülse 10 in Draufsicht. Das Federelement 40, welches die Sicherungshülse 10 gegen ein Herausrutschen aus der Buchse 8 sichert, wird vorzugsweise mit Hilfe eines Laserschnittes 46 aus dem Material der Sicherungshülse 10 herausgeschnitten. Nach erfolgtem Laserschnitt wird die entstandene Lasche derart verformt, dass das Federelement mit einer in Richtung des von der Sicherungshülse 10 nicht umschlossenen Außenraums AN gerichteten Entlastungsrichtung entsteht.

Das Endstück 2 und der Wellschlauch 6 werden vorzugsweise aufeinander abgestimmt, bzw. es wird ein zu dem jeweiligen Wellschlauch 6 passendes Endstück ausgewählt. Beispielsweise wird ein Endstück 2 mit passendem Durchmesser ausgewählt. Außerdem wird die Form und Größe der Rastvorsprünge 26 des Endstücks 2 an die Wellung des Wellschlauchs angepasst. So ist die Ausdehnung B der Rastvorsprünge 26 in Längsrichtung L der Buchse 8 so gewählt, dass diese kleiner ist, als der Abstand A (vgl. Fig. 1) zweier benachbarter Wellen 28 des Wellschlauchs 6. Vorzugsweise werden diese beiden Größe passgenau aufeinander abgestimmt. Um außerdem die Montage der Buchse 8 zu erleichtern, weisen die Rastvorsprünge 26 eine Abschrägung auf, welche an den Freienden der Rastvorsprünge 26 beginnt und dem hinteren Bereich 20 der Buchse 8 zugewandt ist. Aufgrund dieser Abschrägung können beim Einstecken der Buchse 8 in den Wellschlauch 6 die Rastvorsprünge 26 leicht über die einzelnen Wellen 28 des Wellschlauches 6 schnappen, bis schließlich die Endposition der Buchse 8 erreicht ist.

## Patentansprüche

1. Endstück (2) zum Aufsetzen auf ein Freiende (4) eines Wellschlauches (6), umfassend:
a) eine Buchse (8), mit einem dem Freiende (4) des Wellschlauches (6) zugewandten vorderen Bereich (12) und einem diesem vorderen Bereich (12) in einer Längsrichtung (L) der Buchse (8) gegenüberliegenden hinteren Bereich (20), welcher sich im montierten Zustand der Buchse (8) innerhalb des Wellschlauches (6) befindet, wobei
a1) der vordere Bereich (12) der Buchse (8) aus einem Kragen (14) besteht, welcher das Freiende (4) des Wellschlauches (6) zumindest teilweise umschließt, radial in Richtung eines von der Buchse (8) nicht umschlossenen Außenraumes (AN) vorspringt und eine entlang des Umfangs der Buchse (8) verlaufende, sich in Längsrichtung (L) der Buchse (8) öffnende Nut (16) zur zumindest teilweisen Aufnahme des Freiendes (4) des Wellschlauches (6) bildet, und wobei
a2) der hintere Bereich (20) der Buchse (8) aus einer Mehrzahl von Federzungen (22) besteht, welche eine senkrecht zu der Längsrichtung (L) der Buchse (8) orientierte, in Richtung des Außenraumes (AN) der Buchse (8) gerichtete Entlastungsrichtung aufweisen, wobei zumindest ein Teil der Federzungen (22) an ihrer dem Außenraum (AN) zugewandten Außenseite (24) jeweils zumindest einen radial vorspringenden Rastvorsprung (26) zur Realisierung eines in Längsrichtung (L) der Buchse (8) wirksamen Hintergriffs aufweisen,
b) eine von der Buchse (8) aufnehmbare Sicherungshülse (10), welche sich im montierten Zustand des Endstückes (2) in zumindest einem Teil des hinteren Bereichs (20) in Längsrichtung (L) der Buchse (8) in einem von der Buchse (8) umschlossenen Innenraum (IN) erstreckt und das Radialspiel der Federzungen (22) in Richtung des Innenraums (IN) der Buchse (8) begrenzt.

2. Endstück (2) nach Anspruch 1, bei dem die Sicherungshülse (10) passgenau von der Buchse (8) aufgenommen wird und das Radialspiel der Federzungen (22) in Richtung des Innenraums (IN) der Buchse (8) auf eine Wegstrecke begrenzt, die kleiner als die radiale Ausdehnung (BR) der Rastvorsprünge (26) in Richtung des Außenraums (AN) der Buchse (8) ist.

3. Endstück (2) nach Anspruch 1 oder 2, bei dem sich die Sicherungshülse (8) ausgehend von dem hinteren Bereich (20) der Buchse (8) entlang einer dem Innenraum (IN) der Buchse (8) zugewandten Innenseite bis in den vorderen Bereich (12) der Buchse (8) erstreckt.

4. Endstück (2) nach einem der vorstehenden Ansprüche, bei dem die Sicherungshülse (10) verschiebesicher in der Buchse (8) gehalten ist.

5. Endstück (2) nach Anspruch 4, bei dem die Sicherungshülse (10) gegen eine Verschiebung in Richtung des hinteren Bereichs (20) der Buchse (8) durch einen an der Buchse (8) vorhandenen Anschlag gesichert ist.

6. Endstück (2) nach Anspruch 5, bei dem der Anschlag zwischen einem an dem hinteren Ende (20) der Buchse (8) vorhandenen, sich radial in Richtung des Innenraums (IN) der Buchse (8) erstreckenden Vorsprung (30) und einem dem hinteren Ende (20) der Buchse (8) zugewandten Freiende der Sicherungshülse (10) hergestellt ist.

7. Endstück (2) nach Anspruch 6, bei dem der sich in Richtung des Innenraums (IN) erstreckende Vorsprung (30) und eine Innenseite (32) der Sicherungshülse (10) formschlüssig abschließen.

8. Endstück (2) nach einem der Ansprüche 5 bis 7, bei dem der Anschlag zwischen einer an einer vorderen Stirnseite (34) des Kragens (14) vorhandenen, radial umlaufenden Freidrehung (36) und einem an dem vorderen Freiende der Sicherungshülse (10) vorhandenen, radial in Richtung des Außenraums (AN) vorspringenden Flansch (38) hergestellt ist.

9. Endstück (2) nach Anspruch 8, bei dem die Stirnseite des Flansches und die Stirnseite (34) des Kragens (14) bündig abschließen.

10. Endstück (2) nach einem der Ansprüche 4 bis 9, bei dem die Sicherungshülse (10) gegen eine Verschiebung in Richtung des vorderen Bereichs (12) der Buchse (8) durch Hintergriff zumindest eines an der Sicherungshülse (10) vorhandenen Federelements (40) in einer an der Buchse (8) vorhandene Sicherungsnut (42) gesichert ist.

11. Endstück (2) nach Anspruch 10, bei dem das an der Sicherungsbuchse (10) vorhandene Federelement (40) eine in Richtung des Außenraums (AN) gerichtete Entlastungsrichtung aufweist und die in der Buchse (8) vorhandene Sicherungsnut (42) in Richtung ihres Innenraums (IN) geöffnet ist.

12. Endstück (2) nach Anspruch 11, bei dem sich die Sicherungsnut (42) radial umlaufend erstreckt, und in die Buchse (8) eingelassen ist.

13. Endstück (2) nach einem der vorstehenden Ansprüche, bei dem zumindest einer der Rastvorsprünge (26) eine Abschrägung aufweist, welche an dem Freiende des Rastvorsprungs (26) beginnend in Richtung des hinteren Bereichs (20) der Buchse (8) verläuft.

14. Teilesatz bestehend aus einem Wellschlauch (6) und einem Endstück (2) nach einem der Ansprüche 1 bis 13, wobei die Ausdehnung (B) der radial vorspringenden Rastvorsprünge (26) in Längsrichtung (L) kleiner als der zwischen benachbarten Wellen (28) des Wellschlauches (6) - gemessen auf der Innenseite (IN) des Wellschlauches (6) - vorhandene Freiraum (A) ist.

15. Teilesatz bestehend aus einem Wellschlauch (6) und einem Endstück (2) nach einem der Ansprüche 1 bis 13, bei dem die Rastvorsprünge (26) passgenau zu dem Freiraum (A) bemessen sind.

16. Teilesatz nach Anspruch 14 oder 15, bei dem der Kragen (14) des Endstücks (2) einen radial umlaufenden, sich in Richtung des hinteren Bereichs der Buchse (8) erstreckenden Außenmantel (18), welcher die Nut (16) in Richtung des Außenraums (AN) begrenzt, aufweist, wobei dieser Außenmantel (18) derart dimensioniert ist, dass der Abstand (52) zwischen einem Boden (48) der Nut (16) und einem Freiende (50) des Außenmantels (18) größer ist als ein Abstand (54) benachbarter Wellen (28) des Wellschlauches (6).

## Claims

1. End piece (2) to apply to a free end (4) of a corrugated tube (6), comprising:
a) a socket (8) having a front region (12) facing towards the free end (4) of the corrugated tube (6) and a rear region (20) lying opposite this front region (12) in a longitudinal direction (L) of the socket (8), said rear region (20) being situated inside the corrugated tube (6) in the assembled state of the socket (8), wherein
a1) the front region (12) of the socket (8) consists of a collar (14) which encloses the free end (4) of the corrugated tube (6) at least partially, projects radially in the direction of an external space (AN) which is not enclosed by the socket (8), and forms a groove (16) which runs along the periphery of the socket (8) and which opens in the longitudinal direction (L) of the socket (8) for the at least partial reception of the free end (4) of the corrugated tube (6), and wherein
a2) the rear region (20) of the socket (8) consists of a plurality of spring tongues (22) which have an unloading orientated perpendicularly to the longitudinal direction (L) of the socket (8) and are directed in the direction of the external space (AN) of the socket (8), wherein at least one part of the spring tongues (22) each have at least one radially projecting latching projection (26) on their outer side (24) facing towards the external space (AN), for the implementation of an effective tongue and groove system in the longitudinal direction (L) of the socket (8),
b) a securing sleeve (10) which is able to be received by the socket (8) and which extends, in the assembled state of the end piece (2), into at least one part of the rear region (20) in the longitudinal direction (L) of the socket (8) in an internal space (IN) enclosed by the socket (8) and limits the radial clearance of the spring tongues (22) in the direction of the internal space (IN) of the socket (8).

2. End piece (2) according to claim 1, in which the securing sleeve (10) is received with precision by the socket (8) and limits the radial clearance of the spring tongues (22) to one stretch in the direction of the internal space (IN) of the socket (8), said stretch being smaller than the radial expansion (BR) of the latching projections (26) in the direction of the external space (AN) of the socket (8).

3. End piece (2) according to claim 1 or 2, in which the securing sleeve (8) extends from the rear region (20) of the socket (8), along an inner side facing towards the internal space (IN) of the socket (8), into the front region (12) of the socket (8).

4. End piece (2) according to one of the preceding claims, in which the securing sleeve (10) is held in the socket (8) to be secured against displacement.

5. End piece (2) according to claim 4, in which the securing sleeve (10) is secured against displacement in the direction of the rear region (20) of the socket (8) by a stop which is present on the socket (8).

6. End piece (2) according to claim 5, in which the stop is produced between a projection (30), which is present on the rear end (20) of the socket (8) and which extends radially in the direction of the internal space (IN) of the socket (8), and a free end of the securing sleeve (10) which faces towards the rear end (20) of the socket (8).

7. End piece (2) according to claim 6, in which the projection (30) extending in the direction of the internal space (IN) and an inner side (32) of the securing sleeve (10) close up positively.

8. End piece (2) according to one of claims 5 to 7, in which the stop is produced between an undercut (36), which is present on a front side (34) of the collar (14) and circulates radially, and a flange (38) which is present on the front free end of the securing sleeve (10) and projects radially in the direction of the external space (AN).

9. End piece (2) according to claim 8, in which the front side of the flange and the front side (34) of the collar (14) are flush together.

10. End piece (2) according to one of claims 4 to 9, in which the securing sleeve (10) is secured against displacement in the direction of the front region (12) of the socket (8) by tongue and groove system of at least one spring element (40) which is present on the securing sleeve (10) in a securing groove (42) which is present on the socket (8).

11. End piece (2) according to claim 10, in which the spring element (40) which is present on the securing sleeve (10) has an unloading direction directed in the direction of the external space (AN) and the securing groove (42) which is present in the socket (8) is open in the direction of the internal space (IN).

12. End piece (2) according to claim 11, in which the securing groove (42) extends radially in a circulating manner and is admitted into the socket (8).

13. End piece (2) according to one of the preceding claims, in which at least one of the latching projections (26) has a chamfer which runs on the free end of the latching projection (26) beginning in the direction of the rear region (20) of the socket (8).

14. Set of parts consisting of a corrugated tube (6) and an end piece (2) according to one of claims 1 to 13, wherein the expansion (B) of the radially projecting latching projections (26) in the longitudinal direction (L) is smaller than the clearance (A) which is present between adjacent waves (28) of the corrugated tube (6) - measured on the inner side (IN) of the corrugated tube (6).

15. Set of parts consisting of a corrugated tube (6) and an end piece (2) according to one of claims 1 to 13, in which the latching projections (26) are measured with precision with respect to the free space (A).

16. Set of parts according to claim 14 or 15, in which the collar (14) of the end piece (2) has an outer sheath (18) which circulates radially and which extends in the direction of the rear region of the socket (8) and which limits the groove (16) in the direction of the external space (AN), wherein this outer sheath (18) is dimensioned in such a way that the distance (52) between a base (48) of the groove (16) and a free end (50) of the outer sheath (18) is larger than a distance (54) of adjacent waves (28) of the corrugated tube (6).

## Revendications

1. Pièce d'extrémité (2) à poser sur l'extrémité libre (4) d'un tuyau annelé (6), comprenant :
(a) une bague (8), avec une zone avant (12) tournée vers l'extrémité libre (4) du tuyau annelé (6) et avec une zone arrière (20) opposée à cette zone avant (12) dans une direction longitudinale (L) de la bague (8), qui se trouve à l'état monté de la bague (8) à l'intérieur du tuyau annelé (6), dans laquelle
(a1) la zone avant (12) de la bague (8) se compose d'un col (14), qui entoure au moins partiellement l'extrémité libre du tuyau annelé (6), est saillant radialement en direction d'un espace extérieur (AN) non entouré par la bague (8) et forme une rainure (16) s'étendant le long de la périphérie de la bague (8) et s'ouvrant dans la direction longitudinale (L) de la bague (8) pour la réception au moins partielle de l'extrémité libre (4) du tuyau annelé (6), et dans laquelle
(a2) la zone arrière (20) de la bague (8) se compose d'une multiplicité de languettes élastiques (22), qui présentent une direction de délestage orientée perpendiculairement à la direction longitudinale (L) de la bague (8) et dirigée vers l'espace extérieur (AN), dans laquelle au moins une partie des languettes élastiques (22) présentent, sur leur côté extérieur (24) tourné vers l'espace extérieur (AN), respectivement au moins une saillie d'encliquetage (26) radialement saillante pour la réalisation d'un accrochage arrière agissant dans la direction longitudinale (L) de la bague (8) ;
(b) un manchon de fixation (10) pouvant prendre place dans la bague (8), qui s'étend, à l'état monté de la pièce d'extrémité (2) dans au moins une partie de la zone arrière (20) dans la direction longitudinale (L) de la bague (8), dans un espace intérieur (IN) entouré par la bague (8) et qui limite le jeu radial des languettes élastiques (22) en direction de l'espace intérieur (IN) de la bague (8).

2. Pièce d'extrémité (2) selon la revendication 1, dans laquelle le manchon de fixation (10) est logé en ajustement serré dans la bague (8) et limite le jeu radial des languettes élastiques (22) en direction de l'espace intérieur (IN) de la bague (8) à une course, qui est plus petite que l'extension radiale (BR) des saillies d'encliquetage (26) en direction de l'espace extérieur (AN) de la bague (8).

3. Pièce d'extrémité (2) selon la revendication 1 ou 2, dans laquelle le manchon de fixation (10) s'étend, à partir de la zone arrière (20) de la bague (8) le long d'un côté intérieur tourné vers l'espace intérieur (IN) de la bague (8) jusque dans la zone avant (12) de la bague (8).

4. Pièce d'extrémité (2) selon l'une quelconque des revendications précédentes, dans laquelle le manchon de fixation (10) est maintenu sans glissement dans la bague (8).

5. Pièce d'extrémité (2) selon la revendication 4, dans laquelle le manchon de fixation (10) est assuré contre un glissement en direction de la zone arrière (20) de la bague (8) par une butée présente sur la bague (8).

6. Pièce d'extrémité (2) selon l'une quelconque des revendications précédentes, dans laquelle la butée est réalisée entre une saillie (30) présente sur la zone arrière (20) de la bague (8) et s'étendant radialement en direction de l'espace intérieur (IN) de la bague (8) et une extrémité libre du manchon de fixation (10) tournée vers l'extrémité arrière (20) de la bague (8).

7. Pièce d'extrémité (2) selon la revendication 6, dans laquelle la saillie (30) s'étendant en direction de l'espace intérieur (IN) et un côté intérieur (32) du manchon de fixation (10) se raccordent par emboîtement.

8. Pièce d'extrémité (2) selon l'une quelconque des revendications 5 à 7, dans laquelle la butée est réalisée entre une portée libre radialement périphérique (36), présente sur un côté frontal avant (34) du col (14), et une bride (38) radialement saillante en direction de l'espace extérieur (AN), présente sur l'extrémité libre avant du manchon de fixation (10).

9. Pièce d'extrémité (2) selon la revendication 8, dans laquelle le côté frontal de la bride et le côté frontal (34) du col (14) se raccordent en alignement.

10. Pièce d'extrémité (2) selon l'une quelconque des revendications 4 à 9, dans laquelle le manchon de fixation (10) est assuré contre un glissement en direction de la zone avant (12) de la bague (8) par accrochage arrière d'au moins un élément de ressort (40) présent sur le manchon de fixation (10) dans une rainure de fixation (42) présente sur la bague (8).

11. Pièce d'extrémité (2) selon la revendication 10, dans laquelle l'élément de ressort (40) présent sur le manchon de fixation (10) présente une direction de délestage orientée en direction de l'espace extérieur (AN) et la rainure de fixation (42) présente dans la bague (8) est ouverte en direction de son espace intérieur (IN).

12. Pièce d'extrémité (2) selon la revendication 11, dans laquelle la rainure de fixation (42) s'étend radialement en périphérie, et est taillée dans la bague (8).

13. Pièce d'extrémité (2) selon l'une quelconque des revendications précédentes, dans laquelle au moins une des saillies d'encliquetage (26) présente un chanfrein, qui s'étend depuis l'extrémité libre de la saillie d'encliquetage (26) en direction de la zone arrière (20) de la bague (8).

14. Ensemble de pièces composé d'un tuyau annelé (6) et d'une pièce d'extrémité (2) selon l'une quelconque des revendications 1 à 13, dans lequel l'extension (B) des saillies d'encliquetage radialement saillantes (26) dans la direction longitudinale (L) est plus petite que l'espace libre (A) entre des ondulations voisines (28) du tuyau annelé (6) - mesuré sur le côté intérieur (IN) du tuyau annelé (6).

15. Ensemble de pièces composé d'un tuyau annelé (6) et d'une pièce d'extrémité (2) selon l'une quelconque des revendications 1 à 13, dans lequel les saillies d'encliquetage (26) sont dimensionnées en ajustement serré par rapport à l'espace libre (A).

16. Ensemble de pièces selon la revendication 14 ou 15, dans lequel le col (14) de la pièce d'extrémité (2) présente un rebord extérieur (18) radialement périphérique, s'étendant en direction de la zone arrière (20) de la bague (8), qui limite la rainure (16) en direction de l'espace extérieur (AN), dans lequel ce rebord extérieur (18) est dimensionné de telle manière que la distance (52) entre un fond (48) de la rainure (16) et une extrémité libre (50) du rebord extérieur (18) soit plus grande qu'une distance (54) de deux ondulations voisines (28) du tuyau annelé (6).
